(19)

**Europäisches Patentamt**
**European Patent Office**
**Office européen des brevets**

(11) **EP 4 672 741 A1**

(12) **EUROPEAN PATENT APPLICATION**

(43) Date of publication:
**31.12.2025 Bulletin 2026/01**

(51) International Patent Classification (IPC):
**H04N 19/11** (2014.01)    **H04N 19/119** (2014.01)
**H04N 19/176** (2014.01)   **H04N 19/593** (2014.01)
**H04N 19/14** (2014.01)

(21) Application number: **24306017.5**

(22) Date of filing: **25.06.2024**

(52) Cooperative Patent Classification (CPC):
**H04N 19/119; H04N 19/11; H04N 19/14;**
**H04N 19/176; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **RATH, Gagan Bihari**
**35000 RENNES (FR)**
• **URBAN, Fabrice**
**35235 THORIGNE-FOUILLARD (FR)**
• **BORDES, Philippe**
**35890 LAILLE (FR)**
• **CHEN, Ya**
**35700 RENNES (FR)**

(74) Representative: **Interdigital**
**Immeuble ZEN 2**
**845 A, avenue des Champs Blancs**
**35510 Cesson-Sévigné (FR)**

(54) **INTRA PREDICTION MODE SPLIT WITH TEMPLATE BASED INTRA MODE DERIVATION**

(57)    A method for comprising:
obtaining (1001) a current block; obtaining (1002) a neighbor template of samples in a reconstructed neighborhood of the current block; determining (1004) a seed intra prediction mode using a minimization of a distortion metric based on predictions of the neighbor template from reference samples in a reconstructed neighborhood of the neighbor template; determining (1006) a mode split for the current block based on the seed intra prediction mode; and, generating a predictor of the current block by applying (1012) an intra prediction to each partition of the current block specified by the mode split, the intra prediction being based on the seed intra prediction mode.

Fig. 10

**Description**

## 1. TECHNICAL FIELD

At least one of the present embodiments generally relates to a method and a device for applying intra prediction in a picture.

## 2. BACKGROUND

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

Many coding tools for intra prediction were proposed in the past. Until recently, a great majority of intra prediction tools were forward prediction tools, that is, the prediction methods used at the encoder is explicitly signaled to the decoder. Thus, the decoder complexity is kept at the minimum. In addition, in a majority of intra prediction tools, the prediction direction remains the same throughout a block.

A current trend is to complement the forward intra prediction tools by intra tools employing backward estimation, that is, the intra prediction modes are estimated using already decoded causal samples in a picture. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. One advantage of these modes based on backward estimation is to allow multiple predictions for a same block since the encoder uses a minimum amount of signaling to indicate which modes are employed. An underlying assumption behind these methods is that not all parts of a block have the same directionality and therefore using multiple predictions can result in better predictions.

This assumption seems to be reasonable for larger blocks as the natural imagery can contain varying directionality of object structures. While current implementations of the backward intra prediction modes allow determining the best intra prediction modes of the various parts of the block, no backward solution is proposed for determining other features of a block comprising a plurality of directionalities such as how splitting the block in parts having an homogeneous directionality, i.e. the best mode split of a block.

It is desirable to propose solutions allowing to overcome the above issue. In particular, it is desirable to have intra prediction modes correcting the insufficiencies of existing backward intra prediction modes, for instance, for determining the best mode split of a block.

## 3. BRIEF SUMMARY

In a first aspect, one or more of the present embodiments provide a method for encoding comprising:

> obtaining a current block;
> obtaining a neighbor template of samples in a reconstructed neighborhood of the current block;
> determining at least one seed intra prediction mode using a minimization of a first distortion metric based on predictions of the neighbor template from reference samples in a reconstructed neighborhood of the neighbor template;
> determining a final seed intra prediction mode and a final mode split for the current block based on the at least one seed intra prediction mode; and, generating a predictor of the current block by applying an intra prediction to each partition of the current block specified by the final mode split, the intra prediction being based on the final seed intra prediction mode.

In a second aspect, one or more of the present embodiments provide a method for decoding comprising:

> obtaining a current block;
> obtaining a neighbor template of samples in a reconstructed neighborhood of the current block;
> determining at least one seed intra prediction mode using a minimization of a first distortion metric based on predictions of the neighbor template from reference samples in a reconstructed neighborhood of the neighbor template;
> determining a final seed intra prediction and a final mode split for the current block based on the at least one seed intra prediction mode; and,
> generating a predictor of the current block by applying an intra prediction to each partition of the current block specified by the final mode split, the intra prediction being based on the final seed intra prediction mode.

In an embodiment of the first or the second aspect, determining a final mode split for the current block comprises, for each seed intra prediction mode of the at least one seed intra prediction mode, determining a mode split in a subset of a set of mode splits comprising mode splits specifying partition configurations of the current block in at least two partitions depending on the seed intra prediction mode.

In an embodiment of the first or the second aspect, the subset includes horizontal mode splits responsive to the seed intra prediction mode is an angular vertical mode, the subset includes vertical mode splits responsive to the seed intra prediction mode is an angular horizontal mode, and the subset includes a split mode indicating that the current block is not split responsive to the seed intra prediction mode is a non-angular mode.

In an embodiment of the first or the second aspect, determining a final seed intra prediction mode and a final mode split for the current block comprises identifying a couple of a mode split of the subset of mode splits and of a seed intra prediction mode of the at least one seed intra prediction mode such that a prediction of the neighbor template partitioned according to the mode split of the couple from the reference samples, the prediction of each partition being derived from the seed intra prediction mode of the couple, minimizes a second distortion metric representative of a difference between the prediction of the neighbor template and the neighbor template.

In an embodiment of the first or the second aspect, determining a final seed intra prediction mode and a final mode split for the current block comprises identifying a couple of a mode split of the subset of mode splits and of a seed intra prediction mode of the at least one seed intra prediction mode such that a prediction of the current block partitioned according to the mode split of the couple, the prediction of each partition being derived from the seed intra prediction mode of the couple, minimizes a rate distortion metric in which a distortion is representative of a difference between the current block and the prediction of the current block.

In an embodiment of the first or the second aspect, an information representing the final mode split is signaled.

In an embodiment of the first or the second aspect, wherein determining at least one seed intra prediction mode using a minimization of a first distortion metric based on predictions of the neighbor template from the reference samples comprises determining a first seed intra prediction mode corresponding to a lowest value of the first distortion metric and a second seed intra prediction mode providing a next lowest value of the first distortion metric.

In an embodiment of the first or the second aspect, responsive to at least one condition is verified, the first seed intra prediction mode is used for a first partition of the current block and the second seed intra prediction mode is used for a second partition of the current block.

In an embodiment of the first or the second aspect, the at least one condition is verified responsive to the first seed intra prediction mode and the second seed intra prediction mode are angular modes, the first seed intra prediction mode and the second seed intra prediction mode are different, the second seed intra prediction mode is in a range of intra prediction modes around the first seed intra prediction mode.

In a third aspect, one or more of the present embodiments provide a device for encoding comprising electronic circuitry configured for:

obtaining a current block;
obtaining a neighbor template of samples in a reconstructed neighborhood of the current block;
determining at least one seed intra prediction mode using a minimization of a first distortion metric based on predictions of the neighbor template from reference samples in a reconstructed neighborhood of the neighbor template;
determining a final seed intra prediction mode and a final mode split for the current block based on the at least one seed intra prediction mode; and, generating a predictor of the current block by applying an intra prediction to each partition of the current block specified by the final mode split, the intra prediction being based on the final seed intra prediction mode.

In a third aspect, one or more of the present embodiments provide a device for decoding comprising electronic circuitry configured for:

obtaining a current block;
obtaining a neighbor template of samples in a reconstructed neighborhood of the current block;
determining at least one seed intra prediction mode using a minimization of a first distortion metric based on predictions of the neighbor template from reference samples in a reconstructed neighborhood of the neighbor template;
determining a final seed intra prediction and a final mode split for the current block based on the at least one seed intra prediction mode; and,
generating a predictor of the current block by applying an intra prediction to each partition of the current block specified by the final mode split, the intra prediction being based on the final seed intra prediction mode.

In an embodiment of the third and fourth aspect, determining a final seed intra prediction mode and a final mode split for the current block comprises identifying a couple of a mode split of the set of mode splits and of a seed intra prediction mode of the at least one seed intra prediction mode such that a prediction of the neighbor template partitioned according to the mode split of the couple from the reference samples, the prediction of each partition being derived from the seed intra prediction mode of the couple, minimizes a second distortion metric representative of a difference between the prediction of the neighbor template and the neighbor template.

In a fifth aspect, one or more of the present embodiments provide a non-transitory information storage medium storing program code instructions for implementing the method according the first or the second aspect.

In a sixth aspect, one or more of the present embodiments provide a computer program comprising program code instructions for implementing the method according to the first or the second aspect.

## 4. BRIEF SUMMARY OF THE DRAWINGS

Fig. 1 illustrates schematically a context in which embodiments are implemented;

Fig. 2 illustrates schematically an example of partitioning undergone by a picture of pixels of an original video;

Fig. 3 depicts schematically a method for encoding a video stream;

Fig. 4 depicts schematically a method for decoding an encoded video stream;

Fig. 5A illustrates schematically an example of hardware architecture of a processing module able to implement an encoding module or a decoding module in which various aspects and embodiments are implemented;

Fig. 5B illustrates a block diagram of an example of a first system in which various aspects and embodiments are implemented;

Fig. 5C illustrates a block diagram of an example of a second system in which various aspects and embodiments are implemented;

Fig. 6 illustrates schematically a set of already reconstructed samples used to derive an intra prediction mode for a current block;

Fig. 7 illustrates "4" situations where two intra prediction modes are applied over a block which is split horizontally asymmetrically;

Fig. 8 illustrates an Intra prediction in mode partitioning;

Figs. 9A, 9B and 9C illustrates various asymmetric mode splits with a vertical prediction mode; and,

Fig. 10 illustrates schematically an example of implementation of a TIMD based Intra Prediction with Mode Split mode.

## 5. DETAILED DESCRIPTION

The following examples of embodiments are described in the context of a video format similar to the one produce by ECM (Enhanced compression model) as described in document JVET-AF2025: Algorithm description of Enhanced Compression Model 11 (ECM 11) / Joint Video Experts Team (JVET) of ITU-T SG 16 WP 3 and ISOIIEC JTC 1/SC 29, 32nd Meeting, Hannover, DE, 13-20 October 2023 just called *JVET-AF2025* in the following. However, these embodiments are not limited to the video coding/decoding method corresponding to ECM. These embodiments are, in particular, adapted to various video formats comprising (and derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9. In addition, these embodiments are also adapted to various still picture formats such as JPEG.

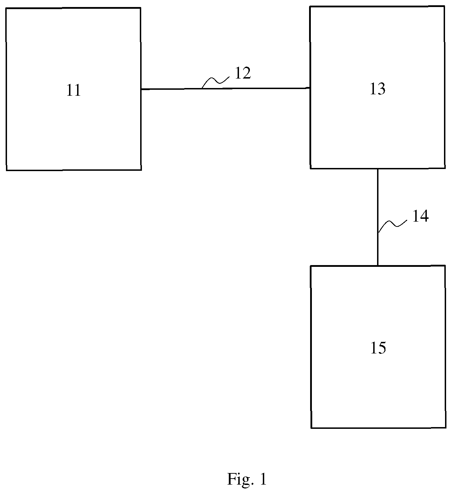

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or SG) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

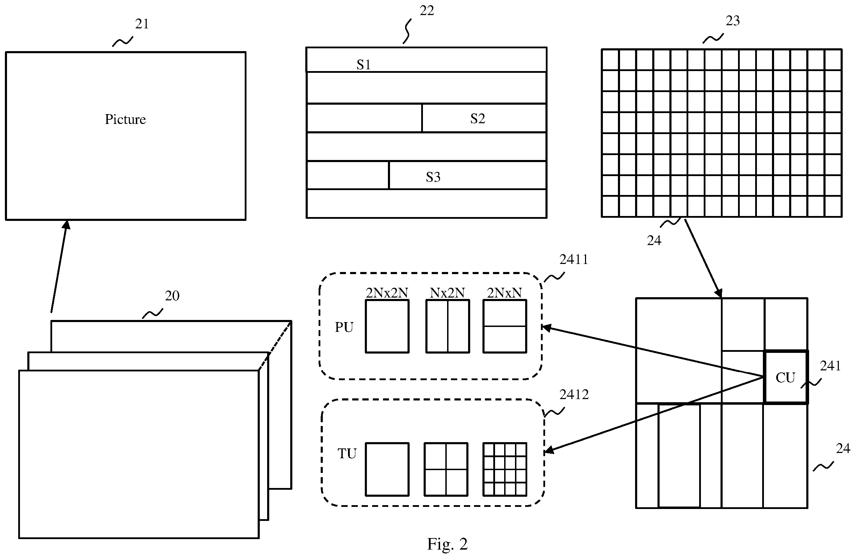

Figs. 2, 3 and 4 introduce an example of video format.

**Fig. 2** illustrates an example of partitioning undergone by a picture of pixels 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks,* each of which consisting of at least one row of CTUs within the tile. Above the concept of tiles and bricks, another encoding entity, called *slice,* exists, that can contain at least one tile of a picture or at least one brick of a tile.

In the example of Fig. 2, as represented by reference 22, the picture 21 is divided into three slices S1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root (*i.e.* the parent node) of the hierarchical tree and can be partitioned in a plurality of CUs (*i.e.* child nodes). Each CU becomes a leaf of the hierarchical tree if it is not further partitioned in smaller CUs, or becomes a parent node of smaller CUs (*i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.,* it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction (*i.e.,* a PU) and transform (*i.e.* a TU) can be different subdivisions of a CU. For example, as represented in Fig. 2, a CU of size $2N \times 2N,$ can be divided in PUs 2411 of size $N \times 2N$ or of size $2N \times N.$ In addition, said CU can be divided in "4" TUs 2412 of size $N \times N$ or in "16" TUs of size

$$\left(\frac{N}{2}\right) \times \left(\frac{N}{2}\right)$$

. The TUs are always of square shapes.

One can note that in VVC, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

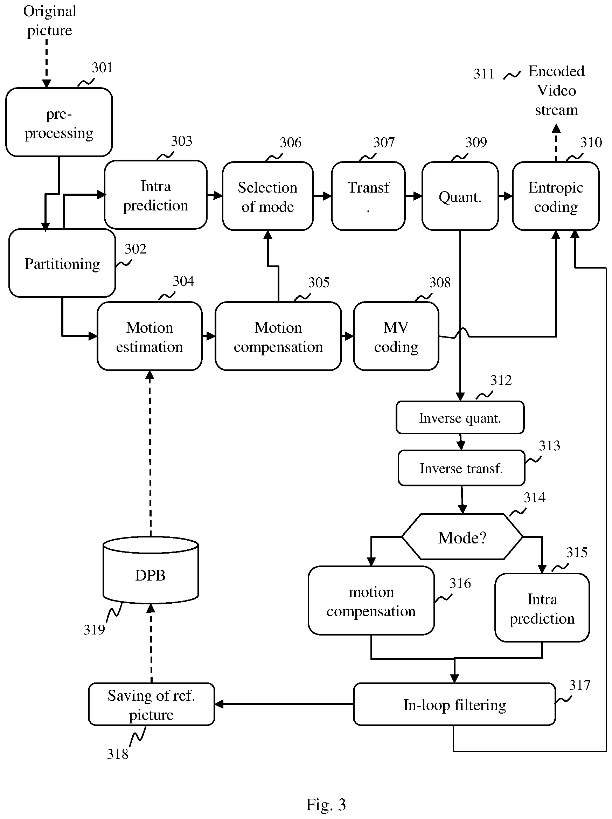

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a preprocessing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components). Pictures obtained by preprocessing are called pre-processed pictures in the following.

The encoding of a pre-processed picture begins with a partitioning of the pre-processed picture during a step 302, as described in relation to Fig. 2. The preprocessed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a current block (i.e. a PU or CU) is spatially predicted from samples of causal neighbour blocks in the same picture, i.e., the blocks on the top and top-right, the blocks on the left and left-bottom, and the top-left block. The encoder constructs a plurality of predictor blocks for the current block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1") and the remaining "65" are angular modes. The planar and DC modes aim to model slow changing intensity regions whereas the angular modes are designed to model directional structures present in pictures. The best prediction mode is encoded and transmitted to the decoder so that the decoder constructs the same intra predictor block for the current block.

To keep the decoder complexity low, the intra prediction uses generally only one row of reference pixels on top and one column of reference pixels on left of the current block. Though the encoder has the option of choosing among three sets of reference lines in a mode called *multiple reference lines* (MRL), the prediction is always based on one reference line that consists of one row on top and one column on left. Because of this limitation, the amount of information contained in the reference pixels is quite limited and thus the intra prediction efficiency, which is based on the correlation between the current block's samples and the reference samples, is also limited. More recently, a proposal for using up to two adjacent reference lines has been proposed. In this case, the predictor is constructed as a weighted average of the two predictors each based on a single reference line.

The above intra prediction modes are forward prediction tools, that is, the intra prediction methods used at the encoder is explicitly signalled to the decoder. Many tools employing backward estimation (that is, the prediction modes are estimated using already decoded causal samples in a picture) were recently proposed. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. The encoder uses the minimum amount of signalling to indicate which modes are employed and, if necessary, to perform a blending of the multiple predictions corresponding to the multiple prediction modes. The underlying assumption behind these methods is that not all parts of a block have the same directionality and therefore using multiple predictions and then blending those predictions can result in better predictions. Estimating these modes in the backward fashion eliminates the need of transmitting multiple prediction modes that can entail significant overhead. The assumption seems to be reasonable for larger blocks as the natural imagery can contain varying directionality of object structures.

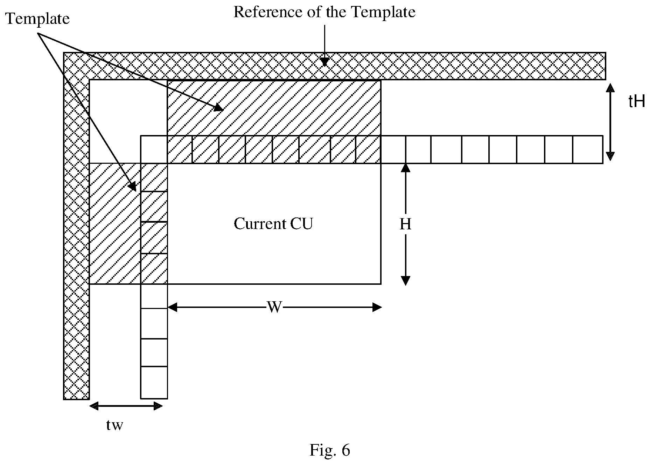

In TIMD, instead of signalling an intra mode for a current block explicitly using a list of most probable modes (MPMs), the information is derived at both the encoder and the decoder from the neighbouring reconstructed samples of the current block. A template (indicated by a patterned region in Fig. 6) specifies a set of already reconstructed samples, which are used to derive the intra mode. The template size is denoted as the number of samples within the template that extends to the above and to the left of the current block. For example, a template size of "2" (i.e., tW = 2 or tH = 2) is used for 4x4 and 8x8 blocks and a template size of "4" (i.e., tW=4 or tH=4) is used for 16x16 and larger blocks. In cases, when the left (respectively the top) neighbour block of the current block is not available, the template consists of only the patterned region on top (respectively on left) of the current block.

For each intra prediction mode in an MPM list, the decoder computes a prediction from a reference of the template (indicated in Fig. 6). For each prediction, a Sum of Absolute Transformed Differences (SATD) between the prediction and the original reconstructed samples of the template is calculated. In a first step, two initial intra prediction modes corresponding to the minimum SATD are selected. The first initial intra prediction mode with the lowest SATD is denoted $INIT\_IPM_{timd\_1st}$ and the initial intra prediction mode corresponding to the second lowest SATD is denoted $INIT\_IPM_{timd\_2nd}$. In a second step, these two initial intra prediction modes are refined. For each of these two intra prediction modes, if the initial intra prediction mode is neither planar nor DC, a SATD is computed for the two closest extended directional intra prediction modes (i.e., the two closest prediction directions at sample resolution of (1/64)) of the initial intra prediction mode). Two sets each comprising an initial intra prediction mode (resulting from the first step) and two refined intra prediction modes resulting from the refinement are therefore obtained. In each set, the intra prediction mode minimizing the SATD is selected. The intra prediction mode derived from the mode $INIT\_IPM_{timd\_1st}$ is denoted $IPM_{timd\_1st}$ and the intra prediction mode derived from the mode $INIT\_IPM_{timd\_2nd}$ is denoted $IPM_{timd\_2nd}$. Thus, for TIMD, the set of directional intra prediction modes is extended from 65 to 129, by increasing the angle resolution to (1/64). If the SATD of the selected two intra prediction modes satisfies the condition that $SATD_{IPM\_timd\_2nd} < 2 * SATD_{IPM\_timd\_1st}$, the predictions of the current block obtained with these two intra prediction modes are blended together with weights to get a final prediction for the current block. The first prediction is obtained with the first reference line (the top and left reference arrays closest to a target block) whereas the second prediction is obtained with the second reference line (the top and left reference arrays next to the closest). The weights are determined from relative magnitudes of the associated SATDs. Otherwise

$(SATD_{IPM\_timd\_2nd} \geq 2 * SATD_{IPM timd_{1st}})$, only the first intra prediction mode $IPM_{timd\_1st}$ is used for the prediction of the current block as the TIMD mode. A dedicated flag called *timd_flag* is signaled by the encoder to indicate if the best prediction was obtained with the TIMD mode. The *timd_flag* is CABAC encoded after a DIMD flag, a MIP flag and an IntraTmp flag. Thus, if a decoder decodes these flags to be all zeros, then it decodes the *timd_flag*. If the flag is "1", then it derives the two TIMD modes $IPM_{timd\_1st}$ and $IPM_{timd\_2nd}$ exactly in the same manner as the encoder. Then, using the same SATD condition mentioned above, it decides to blend the two predictions or not. If the blending is performed, the blending weights are the same as used by the encoder. If *timd_flag* is decoded to be "0", then the decoder does not derive the TIMD modes.

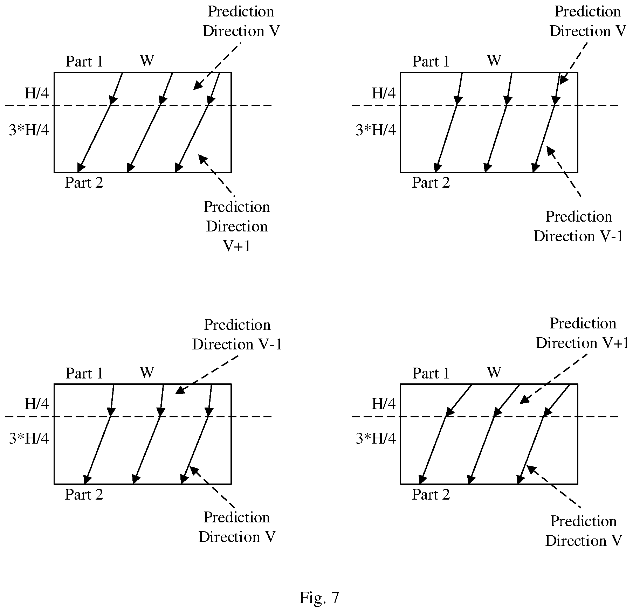

Intra prediction modes with mode partitioning were also recently proposed. The concept behind these modes is to have at least two angular intra prediction modes for a current block. The intra prediction modes are adjacent and they are applied to different non-overlapping parts of the current block. **Fig. 7** shows "4" situations where two intra prediction modes are applied over a block which is split horizontally asymmetrically. In Fig. 7, the intra prediction modes correspond to vertical directions. In one case, the upper partition pixels have an intra prediction mode *Y* and the lower partition pixels have an intra prediction mode *V*-1 or *V*+1. In the other case, intra prediction modes are the other way around. The current block can be split analogously in vertical direction when the intra prediction directions are horizontal. If the encoder splits the intra prediction modes, it signals the split with an appropriate coding scheme so that the decoder also applies the same mode split.

In a general case, the intra prediction mode of the pixels on the top row (or left column) can be *V1* and the prediction mode of the pixels on the bottom row (or right column) can be *V2* while the pixels on the rows (columns) in-between can be modelled as a function of *V1* and *V2*. For example, as a linear interpolation of *V1* and *V2* depending on the distance from the top row (left column) and bottom row (right column).

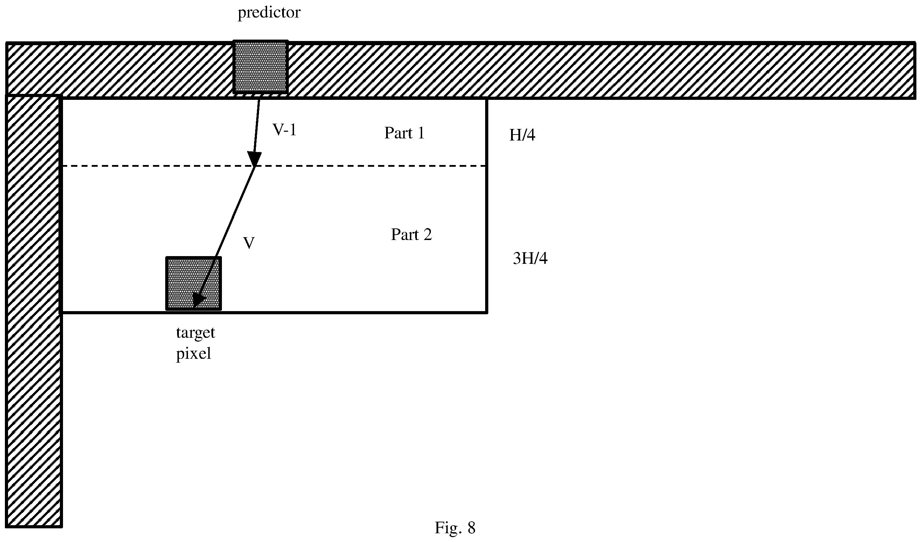

The prediction process is done as usual for a single prediction mode but taking into account the prediction directions of above (respectively left) samples for a vertical (respectively horizontal) mode. The predictor for a sample is localized using parameters *intraPredAngle* of above pixels for a vertical mode, as shown in **Fig. 8.** Here, there is no blending, and the prediction is obtained in one step. This prediction process has the physical sense of continuity of object curvature in a picture. This case also applies if we consider splits of a block into three or four parts.

The prediction process is also unlike that in ISP (Intra Sub Partition). Here all pixels in the current block are predicted at the same time using the reference samples on top and left of the current block. But in ISP, different partitions of the current block are processed in sequential order where a partition is predicted and reconstructed after the complete reconstruction of the previous partitions of the current block in sequence order. The prediction for a partition is obtained using its own reference samples, which consist of the reconstructed samples from the previous partition and part of the reference samples of the current block.

The inter prediction consists in predicting the pixels of a current block from a block of pixels, referred to as the reference block, of a picture preceding or following the current picture, this picture being referred to as the reference picture. During the coding of a current block in accordance with the inter prediction method, a block of the reference picture closest, in accordance with a similarity criterion, to the current block is determined by a motion estimation step 304. During step 304, a motion vector indicating the position of the reference block in the reference picture is determined. Said motion vector is used during a motion compensation step 305 during which a residual block is calculated in the form of a difference between the current block and the reference block. In first video compression standards, the mono-directional inter prediction mode described above was the only inter mode available. As video compression standards evolve, the family of inter modes has grown significantly and comprises now many different inter modes.

During a selection step 306, the prediction mode optimising the compression performances, in accordance with a rate/distortion optimization criterion (i.e. RDO criterion), among the prediction modes tested (Intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal. When the current block is coded according to an intra prediction mode, information indicating the selected intra prediction mode are encoded by an entropy encoder during a step 310. When the current block is encoded according to an inter prediction, when appropriate, a motion vector of the block is predicted from a prediction vector selected from a set of motion vector predictors derived from reconstructed blocks situated in a spatial and temporal vicinity of the block to be encoded. The motion information is next encoded by the entropy encoder during step 310 in the form of a motion residual and an index for identifying the prediction vector. The transformed and quantized residual block is encoded by the entropy encoder during step 310.

Note that the encoding module can bypass both transform and quantization, *i.e.,* the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream 311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the current block is reconstructed so that the pixels corresponding to that block can be used for future predictions. This reconstruction phase is also referred to as a *prediction loop.* An inverse quantization is therefore applied to the transformed and quantized residual block during a step 312 and an inverse transformation is applied during a step 313. According to the prediction mode used for the block obtained during a step 314, the predictor block of the block is reconstructed. If the current block is encoded according to an inter prediction mode, the encoding module applies, when appropriate, during a step 316, a motion compensation using the motion vector of the current block in order to identify the reference block of the current block. If the current block is encoded according to an intra prediction mode, during a step 315, the intra prediction mode selected for the current block is used for reconstructing the predictor block of the current block. The predictor block and the reconstructed residual block are added in order to obtain the reconstructed current block.

Following the reconstruction, an in-loop filtering intended to reduce the encoding artefacts is applied, during a step 317, to the reconstructed block. This filtering is called *in-loop filtering* since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

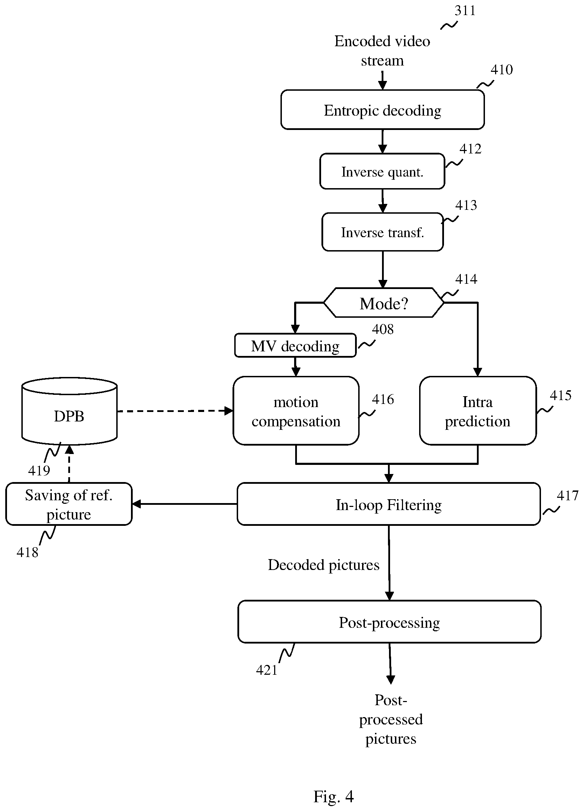

**Fig. 4** depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a current block, it starts with an entropic decoding of the current block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the current block using the prediction vector index and the motion residual.

If the block has been encoded according to an intra prediction mode, entropy decoding allows, when appropriate, to obtain a prediction mode and a prediction residual block. Steps 412, 413, 414, 415, 416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB 419 in a step 418. When the decoding module decodes a given picture, the pictures stored in the DPB 419 are identical to the pictures stored in the DPB 319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

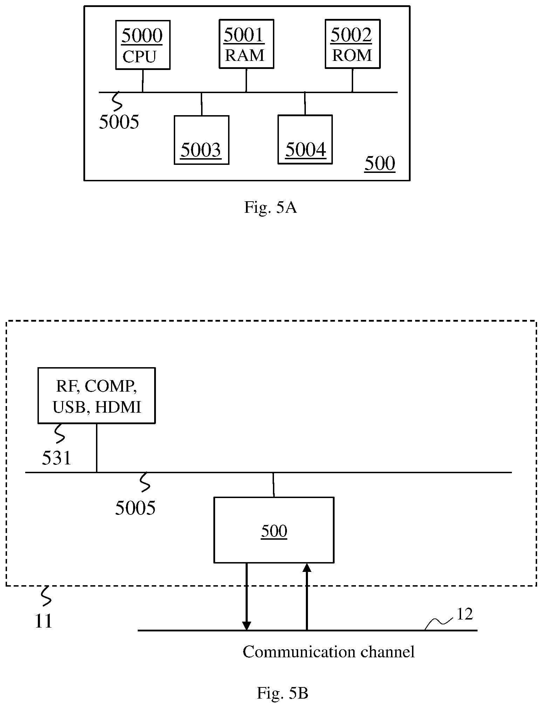

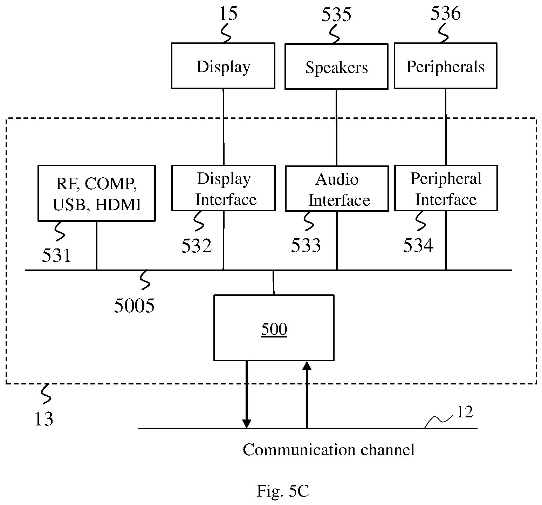

Fig. 5A, 5B and 5C describes examples of device, apparatus and/or system allowing implementing the various embodiments.

**Fig. 5A** illustrates schematically an example of hardware architecture of a processing module 500 able to implement an encoding module or a decoding module capable of implementing respectively a method for encoding of Fig. 3 and a method for decoding of Fig. 4 modified according to different aspects and embodiments. The encoding module is for example comprised in the system 11 when this system is in charge of encoding the video stream. The decoding module is for example comprised in the system 13.

The processing module 500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module 500 implements a decoding module, the communication interface 5004 enables for instance the processing module 500 to receive encoded video streams and to provide a sequence of decoded pictures. If the processing module 500 implements an encoding module, the communication interface 5004 enables for instance the processing module 500 to receive a sequence of original picture data to encode and to provide an encoded video stream.

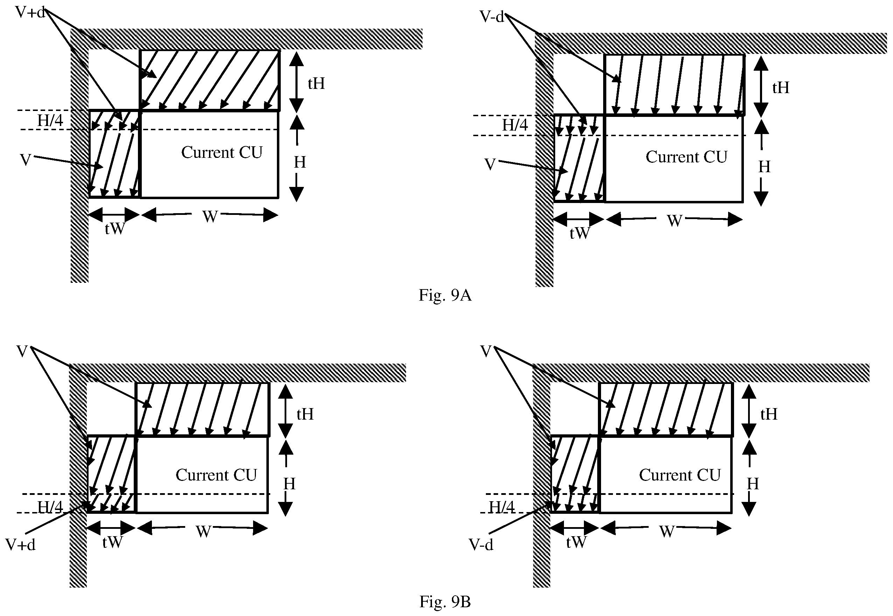

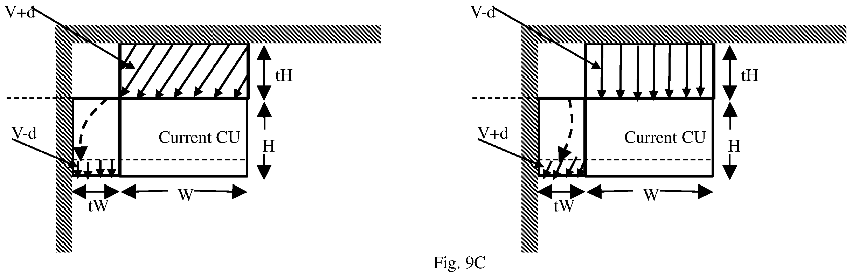

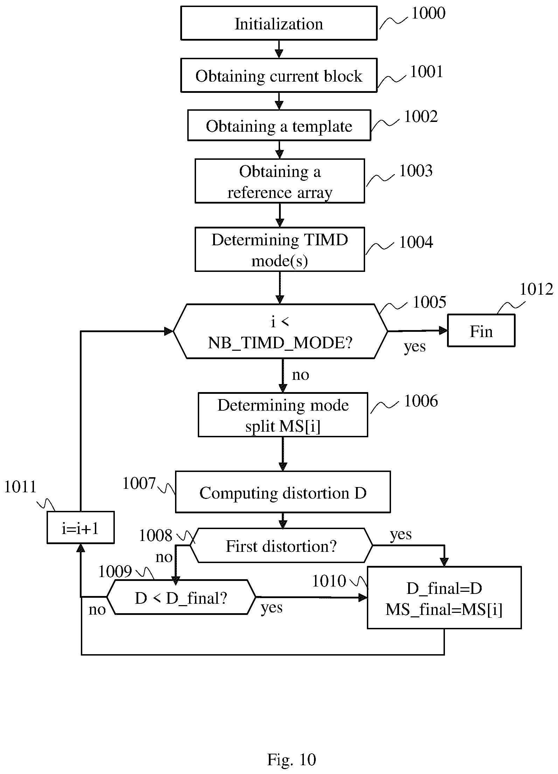

The processor 5000 is capable of executing instructions loaded into the RAM 5001 from the ROM 5002, from an external memory (not shown), from a storage medium, or from a communication network. When the processing module 500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig. 3, and methods illustrated in relation to Figs. 9A, 9B, 9C and 10, these methods comprising various aspects and embodiments described below in this document.

All or some of the algorithms and steps of the methods of Figs. 3, 4 and 9A, 9B, 9C and 10 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4, 9A, 9B, 9C and 10.

**Fig. 5C** illustrates a block diagram of an example of the system 13 in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system 15, speakers 535, and other peripheral devices 536. The display system 15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), ahead mounted display or other devices. The display system 15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system 15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12 in Fig. 5C via the communication interface 5004. The display system 15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system 15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, etc. In various embodiments, these data are raw data provided for example by a picture and/or audio acquisition module connected to the system 11 or comprised in the system 11. In that case, the processing module 500 take in charge the encoding of these data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying a TIMD based Intra Prediction with Mode Split (TIPMS) according to an embodiment of this application.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a TIMD based Intra Prediction with Mode Split (TIPMS) according to an embodiment of this application.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

Existing backward intra prediction methods do not use any template to derive a best mode split. Therefore, an encoder has to signal the best split configuration with appropriate coding bits depending on an allowed number of mode splits or configurations.

In the following embodiment, we focus on a new intra prediction mode denoted as TIMD based Intra Prediction with Mode Split (TIPMS) comprising deriving a best mode split using a template. A mode split corresponds here to characteristics of a partition configuration of a current block comprising for example a position of a split and a direction of the split. The underlying idea is to estimate the best mode split using an approach similar to TIMD in order that overhead bits for signaling the best mode split are not required at all, or to estimate a limited number of best mode splits which reduces the signaling cost of the best mode split finally selected. In the following, we will show various embodiment wherein the TIMD mode is derived as usual using a template and then the same template is used to determine the best split configuration.

**Figure 9A** illustrates an embodiment of the TIPMS mode with a horizontal split for a vertical TIMD intra prediction direction at one-fourth the height of a current block. The samples in the top template are predicted with an intra prediction mode $Y+d$, where $V$ represents an index of a TIMD intra prediction mode, d is a fixed integer (e.g., equal to -1, 1, -2, 2, -4 or 4) for example, known by the encoder and the decoder. Alternatively, d can be a function of target block size. The samples in the top part of the left template have the same intra prediction mode as those in the top template and the samples in the bottom part of the left template have the TIMD intra prediction mode *V*. The samples in the top template and left template are predicted using a reference samples (represented by a textured L-shaped array in Fig. 9A).

**Figure 9B** illustrates another embodiment of the TIPMS mode with a horizontal split for a vertical TIMD prediction direction at three-fourths of the height of a current block.

These are just examples; many other horizontal split cases are possible with a vertical TIMD mode *V*. Similar examples can be constructed with vertical splits for a horizontal TIMD intra prediction mode.

An important point of the TIPMS mode is that the samples in the template are predicted taking into account the intra prediction directions of the samples in above rows (respectively left columns) for a horizontal (respectively vertical) split, as explained in the previous section. The mode split is tested with every candidate intra prediction mode Y that is tested with the template, i.e., the mode split is tested with every candidate intra prediction modes in an MPM list.

After the template is predicted, a SATD or SAD is computed and compared with TIMD intra prediction modes with no split. If a mode split results in a minimum SATD or SAD score, that mode split is selected as the best mode split, this best split mode being associated to the tested TIMD intra prediction mode *V*. The encoder splits the prediction of the current block according to the selected best split mode.

A variant of the TIPMS mode is illustrated in **Fig. 9C.** With a vertical TIMD mode *V*, we show two cases where in one case the top template has an intra prediction mode *V-d* (or *V+d*) and the samples on the last row of the left template have an intra prediction mode *V+d* (or *V-d*). The samples in the other rows of the left template have intra prediction modes linearly interpolated between *V-d* and *V+d* or using any other interpolation model. In this case, there is no explicit mode split of the current block, i.e., the intra prediction direction of a target sample is determined with interpolation based on its row index. Similar examples can be drawn with a horizontal TIMD intra prediction mode *V*, where the left template is predicted with an intra prediction mode *V-d* (or *V+d*) and the samples on the last column of the top template are predicted with an intra prediction mode *V+d* (or *V-d*). The intra prediction directions of samples on other columns of the top template are obtained with interpolation. In this case, the prediction direction of a target sample is determined based on its column index.

**Fig. 10** illustrates schematically a first embodiment of the TIPMS mode.

The process of Fig. 10 is executed by the processing module 500 of the system 11 when the system 11 implements an encoder or by the processing module 500 of the system 13 when the system 13 implements a decoder. The encoder is for example the encoder of Fig. 3 with a modified step 303 implementing the TIPMS mode. The decoder is for example the decoder of Fig. 4 with a modified step 415 implementing the TIPMS mode.

In a step 1000, the processing module 500 initializes a variable i to zero.

In a step 1001, the processing module 500 obtains a current block to predict.

In a step 1002, the processing module 500 obtains a template of samples neighboring the current block. The template is, for example, the one represented in Figs. 9A, 9B and 9C.

In a step 1003, the processing module 500 obtains a reference array of samples neighboring the template of the current block. The reference array of samples is, for example, the one represented in Figs. 9A, 9B and 9C.

In the first embodiment, in a step 1004, the processing module 500 applies the TIMD process until obtaining the first initial intra prediction mode with the lowest SATD denoted $INIT\_IPM_{timd\_1st}$ earlier in the present document. The first initial intra prediction mode with the lowest SATD $INIT\_IPM_{timd\_1st}$ is called "seed TIMD mode" and simply denoted *V* in the following. Therefore, the seed TIMD mode *V* is used in one partition and a derived TIMD mode, denoted *V+d* or *V-d,* is used in another partition.

In a step 1005, the processing module 500 determines if the variable *i* is lower than a number of TIMD modes *NB_TIMD_MODE.* Since only one seed TIMD mode was determined in step 1004, *NB_TIMD_MODE*=1. Since *i* was initialized to zero, step 1005 is followed by a step 1006.

In step 1006, the processing module 500 determines a mode split for the current block based on the seed TIMD mode. The process of step 1006 starts with a predefined set of mode splits known by the encoder and the decoder. Then, the processing module 500 reduces this predefined set depending on the seed TIMD mode *V*. If the seed TIMD mode *V* is the PLANAR mode or the DC mode, then the predefined set is reduced to a subset including the single mode split NO_SPLIT indicating that the current block is not split. If the seed TIMD mode *V* is horizontal, then the predefined set is reduced to the subset of vertical mode splits. If the seed TIMD mode Y is vertical, then the predefined set is reduced to the subset of horizontal mode splits. When the seed TIMD mode is PLANAR or DC, the processing module determines the NO_SPLIT mode as the mode split for the current block. When the seed TIMD mode is neither PLANAR nor DC, the processing module 500 determines the mode split to apply to the current block in the subset of remaining mode splits based on a template based approach similar to the template based approach of TIMD. For each mode split of the subset of mode splits determined from the seed TIMD mode, the processing module 500 computes a prediction from the reference array of the template partitioned according to the mode split and applying the seed TIMD mode Y in the first partition and the derived TIMD mode *V+d* or *V-d* in the second partition. For each prediction, a Sum of Absolute Transformed Differences (SATD) between the prediction and the samples of the template is calculated. The mode split *MS[i]* of the subset allowing minimizing the SATD is selected by the processing module 500.

In a step 1007, the processing module 500 determines a distortion *D* for the mode split *MS[i].* To do so, the processing module 500 partitions the template according to the mode split *MS[i],* predicts the first partition of the template from the reference array using the seed TIMD mode and predicts the second partition of the template from the reference array using the derived TIMD mode. Then, the processing module computes a SATD between the prediction and the original reconstructed samples of the template to obtain the distortion *D.*

In a step 1008, the processing module 500 determines if the distortion *D* computed in step 1007 is the first distortion computed for the current block in the process of Fig. 10.

If yes, in a step 1010, the processing module 500 stores the distortion *D* in a variable *D_final* and the mode split *MS[i]* in a variable *MS_final.*

If no, the processing module 500 compares the distortion *D* to *D_final* and if *D < D_final,* applies step 1010.

Step 1010 is followed by a step 1011 wherein, the variable i is incremented of one unit. Step 1011 is followed by step 1005.

In the first embodiment, since only one seed TIMD mode is determined in step 1004, after step 1011, step 1005 is followed by a step 1012.

During step 1012, the processing module 500 generates a TIPMS predictor by applying to each partition of the current block specified by the mode split indicated by the variable *MS_final* an intra prediction based on the corresponding TIMD mode determined in step 1004 (i.e., the first partition is intra predicted using the seed TIMD mode and the second partition is intra predicted using the derived TIMD mode).

When applied on the encoder side, the process of Fig. 10 is followed by a comparison of the rate-distortion (RD) performance of the TIPMS mode with the mode split *MS_final* with all prediction modes that can be applied to the current block. If the TIPMS mode offers the best RD performance for the current block, the processing module 500 signals a flag *timdFlag* as "1" in the video data 311. A residual is computed between the predictor obtained using the TIPMS mode and the original block and encoded in the video data 311.

When applied on the decoder side, the process of Fig. 10 is executed when a flag *timdFlag* equal to "1" is signaled for the current block in the video data 311. If the flag *timdFlag* is equal to "1" the result of the process of Fig. 10 is equivalent to the result of the regular TIMD mode when the mode split *MS_final* is equal to NO_SPLIT. The residual block decoded from the video data 311 is then added to the predictor block to reconstruct the current block.

In a variant of the first embodiment, when the process of Fig. 10 is applied on the encoder side, step 1004 is followed directly by step 1006, step 1007 is followed directly by step 1010 and step 1010 is followed directly by step 1012.

In a variant of the first embodiment, when the process of Fig. 10 applied on the decoder side, step 1004 is followed directly by step 1006 and step 1006 is followed directly by step 1012.

In a variant of the first embodiment, the predefined set of modes splits comprises mode splits partitioning the current block in at least two partitions. In particular, some mode splits of the predefined set allow splitting the current block in more than two partitions. In that case, the number of derived TIMD modes is equal to the number of partitions minus one.

In a second embodiment, in step 1004, the processing module 500 applies the TIMD process until obtaining the first initial intra prediction mode with the lowest SATD and the second initial intra prediction mode corresponding to the second lowest SATD denoted respectively $INIT\_IPM_{timd\_1st}$ and $INIT\_IPM_{timd\_2nd}$ earlier in the present document. The first initial intra prediction mode with the lowest SATD $INIT\_IPM_{timd\_1st}$ is called "first seed TIMD mode" and simply denoted *V1* in the following. Therefore, the first seed TIMD mode *V1* is used in one partition and a first derived TIMD mode, denoted *V1+d* or *V1-d,* is used in another partition. The second initial intra prediction mode with the lowest SATD $INIT\_IPM_{timd\_2nd}$ is called "second seed TIMD mode" and simply denoted *V2* in the following. Therefore, the second seed TIMD mode *V2* is used in one partition and a second derived TIMD mode, denoted *V2+d* or *V2-d,* is used in another partition.

In the second embodiment, NB_TIMD_MODE = 2 and steps 1006 to 1012 are applied as described in relation to the first embodiment for each seed TIMD mode. Therefore, in step 1006, a mode split *MS[i]* is determined for each seed TIMD mode. The combination of a seed TIMD mode and a mode split minimizing the distortion *D* is then selected.

In a third embodiment, instead of using the neighbor TIMD modes *V1-d* or *V1+d* in the second partition, it uses the second seed TIMD mode *V2* provided it is angular, it is different from the first seed TIMD mode *V1,* and is within *V1-d* and *V1+d.* If both seed TIMD modes are non-angular, then mode split is set equal to NO_SPLIT for the block. Else, if the second seed TIMD mode *V2* is non-angular, or outside the range *V1-d* and *V1+d,* then the second embodiment is applied. Else, if all conditions are fulfilled (the first and second seed TIMD modes *V1* and *V2* are angular, the second seed TIMD mode *V2* is different from the first seed TIMD mode *V1,* and is within *V1-d* and *V1+d,* the third embodiment is applied with the seed TIMD mode equal to *V1* and the derived TIMD mode equal to *V2.*

In a fourth embodiment, during step 1006, instead of applying a template based approach similar to the template based approach of TIMD, the processing module 500 checks the RD performance of each mode split in the subset of mode splits remaining in function of the seed TIMD mode. In other words, on the encoder side, the processing module 500 selects a couple of a seed TIMD mode and of a mode split minimizing a rate distortion metric. In that case, the distortion of the rate distortion metric is computed between the current block and a prediction of the current block partitioned according to the mode split of the couple and wherein the prediction of each partition of the current block is derived from the seed TIMD mode of the couple. On the encoder side, when the TIPMS mode is selected for the current block, the processing module 500 signals the flag *timdFlag*=1 and signals the selected mode split *MS_final* with a variable length code (i.e., a syntax element) if the seed TIMD mode is angular. Here *MS_final* represents the best mode split for the current block, not for the template. If the seed TIMD mode is non-angular, nothing is signaled for the mode split since the mode split NO_SPLIT is systematically applied.

On the decoder side, when the TIPMS mode applies to the current block, the processing module 500 decodes the flag *timdFlag*=1 and the variable length code indicating the mode split *MS_final* if the seed TIMD mode is angular.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described syntax elements, or variations thereof.
- Creating and/or transmitting and/or receiving and/or decoding a bitstream or signal that includes one or more of the described syntax elements, or variations thereof.
- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.
- A server, camera, cell phone, tablet or other electronic device that transmits (e.g. using an antenna) a signal over the air that includes an encoded video stream, and performs at least one of the embodiments described.
- A server, camera, cell phone, tablet or other electronic device that tunes (e.g. using a tuner) a channel to transmit a signal including an encoded video stream, and performs at least one of the embodiments described.

**Claims**

1. A method for encoding comprising:

   obtaining (1001) a current block;
   obtaining (1002) a neighbor template of samples in a reconstructed neighborhood of the current block;
   determining (1004) at least one seed intra prediction mode using a minimization of a first distortion metric based on predictions of the neighbor template from reference samples in a reconstructed neighborhood of the neighbor template;
   determining (1006) a final seed intra prediction mode and a final mode split for the current block based on the at least one seed intra prediction mode; and, generating a predictor of the current block by applying (1012) an intra prediction to each partition of the current block specified by the final mode split, the intra prediction being based on the final seed intra prediction mode.

2. A method for decoding comprising:

   obtaining (1001) a current block;
   obtaining (1002) a neighbor template of samples in a reconstructed neighborhood of the current block;
   determining (1004) at least one seed intra prediction mode using a minimization of a first distortion metric based on predictions of the neighbor template from reference samples in a reconstructed neighborhood of the neighbor template;
   determining (1006) a final seed intra prediction mode and a final mode split for the current block based on the at least one seed intra prediction mode; and,
   generating a predictor of the current block by applying (1012) an intra prediction to each partition of the current block specified by the final mode split, the intra prediction being based on the final seed intra prediction mode.

3. The method of claim 1 or 2 wherein determining (1006) a final mode split for the current block comprises, for each seed intra prediction mode of the at least one seed intra prediction mode, determining a mode split in a subset of a set of mode splits comprising mode splits specifying partition configurations of the current block in at least two partitions depending on the seed intra prediction mode.

4. The method of claim 3 wherein the subset includes horizontal mode splits responsive to the seed intra prediction mode is an angular vertical mode, the subset includes vertical mode splits responsive to the seed intra prediction mode is an angular horizontal mode, and the subset includes a split mode indicating that the current block is not split responsive to the seed intra prediction mode is a non-angular mode.

5. The method of claim 3 or 4 wherein, determining (1006) a final seed intra prediction mode and a final mode split for the current block comprises identifying a couple of a mode split of the subset of mode splits and of a seed intra prediction mode of the at least one seed intra prediction mode such that a prediction of the neighbor template partitioned according to the mode split of the couple from the reference samples, the prediction of each partition being derived from the seed intra prediction mode of the couple, minimizes a second distortion metric representative of a difference between the prediction of the neighbor template and the neighbor template.

6. The method of claim 3 or 4 wherein, determining (1006) a final seed intra prediction mode and a final mode split for the current block comprises identifying a couple of a mode split of the subset of mode splits and of a seed intra prediction mode of the at least one seed intra prediction mode such that a prediction of the current block partitioned according to the mode split of the couple, the prediction of each partition being derived from the seed intra prediction mode of the couple, minimizes a rate distortion metric in which a distortion is representative of a difference between the current block and the prediction of the current block.

7. The method of claim 6 wherein an information representing the final mode split is signaled.

8. The method of any previous claim wherein determining (1004) at least one seed intra prediction mode using a minimization of a first distortion metric based on predictions of the neighbor template from the reference samples comprises determining a first seed intra prediction mode corresponding to a lowest value of the first distortion metric and a second seed intra prediction mode providing a next lowest value of the first distortion metric.

9. The method of claim 8 wherein, responsive to at least one condition is verified, the first seed intra prediction mode is used for a first partition of the current block and the second seed intra prediction mode is used for a second partition of the current block.

10. The method of claim 9 wherein, the at least one condition is verified responsive to the first seed intra prediction mode and the second seed intra prediction mode are angular modes, the first seed intra prediction mode and the second seed intra prediction mode are different, the second seed intra prediction mode is in a range of intra prediction modes around the first seed intra prediction mode.

11. A device for encoding comprising electronic circuitry configured for:

> obtaining (1001) a current block;
> obtaining (1002) a neighbor template of samples in a reconstructed neighborhood of the current block;
> determining (1004) at least one seed intra prediction mode using a minimization of a first distortion metric based on predictions of the neighbor template from reference samples in a reconstructed neighborhood of the neighbor template;
> determining (1006) a final seed intra prediction mode and a final mode split for the current block based on the at least one seed intra prediction mode; and, generating a predictor of the current block by applying (1012) an intra prediction to each partition of the current block specified by the final mode split, the intra prediction being based on the final seed intra prediction mode.

12. A device for decoding comprising electronic circuitry configured for:

> obtaining (1001) a current block;
> obtaining (1002) a neighbor template of samples in a reconstructed neighborhood of the current block;
> determining (1004) at least one seed intra prediction mode using a minimization of a first distortion metric based on predictions of the neighbor template from reference samples in a reconstructed neighborhood of the neighbor template;
> determining (1006) a final seed intra prediction mode and a final mode split for the current block based on the at least one seed intra prediction mode; and,
> generating a predictor of the current block by applying (1012) an intra prediction to each partition of the current block specified by the final mode split, the intra prediction being based on the final seed intra prediction mode.

13. The device of claim 11 or 12 wherein, determining (1006) a final seed intra prediction mode and a final mode split for the current block comprises identifying a couple of a mode split of a set of mode splits and of a seed intra prediction mode of the at least one seed intra prediction mode such that a prediction of the neighbor template partitioned according to the mode split of the couple from the reference samples, the prediction of each partition being derived from the seed intra prediction mode of the couple, minimizes a second distortion metric representative of a difference between the prediction of the neighbor template and the neighbor template.

14. Non-transitory information storage medium storing program code instructions for implementing the method according to any previous claim from claim 1 to 10.

15. A computer program comprising program code instructions for implementing the method according to any previous claim from claim 1 to 10.

Fig. 1

Fig. 2

Fig. 3

Fig. 4

| 5000 CPU | | 5001 RAM | | 5002 ROM |
| --- | --- | --- | --- | --- |

5005

5003

5004

500

Fig. 5A

RF, COMP,
USB, HDMI

531

5005

500

11

Communication channel

12

Fig. 5B

15          535          536

Display      Speakers      Peripherals

| RF, COMP, USB, HDMI | Display Interface | Audio Interface | Peripheral Interface |

531          532          533          534

5005

500

13

12

Communication channel

Fig. 5C

Fig. 6

Fig. 7

predictor

V-1  Part 1  H/4

V  Part 2  3H/4

target
pixel

Fig. 8

EP 4 672 741 A1

Fig. 9A

Fig. 9B

Fig. 9C

```
                    ┌─────────────────────┐
                    │   Initialization    │～ 1000
                    └──────────┬──────────┘
                               │
                    ┌──────────▼──────────┐
                    │Obtaining current block│～ 1001
                    └──────────┬──────────┘
                               │
                    ┌──────────▼──────────┐
                    │ Obtaining a template │～ 1002
                    └──────────┬──────────┘
                               │
                    ┌──────────▼──────────┐
                    │     Obtaining a     │～ 1003
                    │   reference array   │
                    └──────────┬──────────┘
                               │
                    ┌──────────▼──────────┐
                    │ Determining TIMD    │～ 1004
                    │     mode(s)         │
                    └──────────┬──────────┘
                               │
                    ╱──────────▼──────────╲                    ┌────────┐
        ┌──────────▶       i <             ～ 1005      yes    │  Fin   │～ 1012
        │           ╲   NB_TIMD_MODE?     ╱───────────────────▶└────────┘
        │            ╲──────────┬────────╱
        │                       │ no
        │            ┌──────────▼──────────┐
        │            │  Determining mode   │～ 1006
        │            │    split MS[i]      │
        │            └──────────┬──────────┘
        │                       │
        │    1007～  ┌──────────▼──────────┐
        │           │ Computing distortion D │
        │           └──────────┬──────────┘
  1011                         │
    ╲       ┌─────┐   ╱────────▼────────╲          yes
     └──────│i=i+1│  1008～ First distortion? ───────────┐
            └──▲──┘   ╲────────┬────────╱                │
               │          no   │                         │
               │   1009～ ╱─────▼─────╲    1010～  ┌───────▼────────┐
               │    no   ╱  D < D_final?╲  yes     │   D_final=D    │
               └────────◀              ╲─────────▶│  MS_final=MS[i] │
                         ╲─────────────╱          └───────┬────────┘
                                                          │
               └──────────────────────────────────────────┘
```

Fig. 10

| Europäisches Patentamt / European Patent Office / Office européen des brevets | **EUROPEAN SEARCH REPORT** | **Application Number**<br>EP 24 30 6017 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/008611 A1 (INTERDIGITAL CE PATENT HOLDINGS SAS [FR]) 11 January 2024 (2024-01-11) | 1-3,5-15 | INV.<br>H04N19/11<br>H04N19/119 |
| A | * paragraphs [0172], [0173], [0187] - [0191], [0229] - [0233]; figure 11 *<br>----- | 4 | H04N19/176<br>H04N19/593<br>H04N19/14 |
| A | NASER (INTERDIGITAL) K ET AL: "[EE2-1.4 related] Reduced Complexity Spatial GPM", 27. JVET MEETING; 20220713 - 20220722; TELECONFERENCE; (THE JOINT VIDEO EXPLORATION TEAM OF ISO/IEC JTC1/SC29/WG11 AND ITU-T SG.16 ),<br><br>no. JVET-AA0045 ; m60008<br>5 July 2022 (2022-07-05), XP030302723, Retrieved from the Internet: URL:https://jvet-experts.org/doc_end_user/documents/27_Teleconference/wg11/JVET-AA0045-v1.zip JVET-AA0045.docx [retrieved on 2022-07-05]<br>* sections 1, 2 *<br>----- | 1-15 | |
| A | WANG (OPPO) F ET AL: "EE2-1.4: Spatial GPM", 27. JVET MEETING; 20220713 - 20220722; TELECONFERENCE; (THE JOINT VIDEO EXPLORATION TEAM OF ISO/IEC JTC1/SC29/WG11 AND ITU-T SG.16 ),<br><br>no. JVET-AA0118 ; m60094<br>7 July 2022 (2022-07-07), XP030302939, Retrieved from the Internet: URL:https://jvet-experts.org/doc_end_user/documents/27_Teleconference/wg11/JVET-AA0118-v1.zip JVET-AA0118-v1.docx [retrieved on 2022-07-07]<br>* sections 2, 3 *<br>----- | 1-15 | **TECHNICAL FIELDS SEARCHED (IPC)**<br><br>H04N |
| | -/-- | | |

The present search report has been drawn up for all claims

| Place of search | Date of completion of the search | Examiner |
|---|---|---|
| Munich | 2 December 2024 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOI (LGE) J ET AL: "Non-CE3: Simplified intra mode candidates for ISP", 126. MPEG MEETING; 20190325 - 20190329; GENEVA; (MOTION PICTURE EXPERT GROUP OR ISO/IEC JTC1/SC29/WG11), , no. m46888 13 March 2019 (2019-03-13), XP030209801, Retrieved from the Internet: URL:http://phenix.int-evry.fr/mpeg/doc_end _user/documents/126_Geneva/wg11/m46888-JVE T-N0230-v2-JVET-N0230_v2.zip JVET-N0230_v2.docx [retrieved on 2019-03-13] * sections 1, 2 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 2 December 2024 | Montoneri, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                 

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 24 30 6017

This annex lists the patent family members relating to the patent documents cited in  the above-mentioned European search report.
The members are as contained in the European Patent Office EDP file on
The European Patent Office is in no way liable for these particulars which are merely given for the purpose of information.

02-12-2024

| Patent document cited in search report | Publication date | Patent family member(s) | | Publication date |
|---|---|---|---|---|
| WO 2024008611 A1 | 11-01-2024 | TW | 202404367 A | 16-01-2024 |
| | | WO | 2024008611 A1 | 11-01-2024 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *JVET-AF2025: Algorithm description of Enhanced Compression Model 11 (ECM 11) / Joint Video Experts Team (JVET) of ITU-T SG 16 WP 3 and ISOIIEC JTC 1/SC 29, 32nd Meeting, Hannover, DE*, 13 October 2023